# EUROPÄISCHE PATENTANMELDUNG

(11) **EP 1 184 399 A2**
(43) Veröffentlichungstag der Anmeldung: **06.03.2002**
(21) Anmeldenummer: 01116975.2
(22) Anmeldetag: 12.07.2001
(51) Int. Cl.: C08G 18/75, C08G 18/73, C08G 18/79, C08G 18/32

(54) **Neue Polyharnstoffe auf der Basis von IPDI, HDI, deren Isocyanurate und Aminen**

(30) Priorität: 29.08.2000 DE 10042322
(71) Anmelder: Degussa AG, 40474 Düsseldorf (DE)
(72) Erfinder: Weiss, Jörn Volker, Dr., 45721 Haltern (DE); Grenda, Werner, 44627 Herne (DE)

(57) **Zusammenfassung**

Die Erfindung betrifft neue Polyharnstoffe auf der Basis von Isophorondiisocyanat (IPDI) Hexamethylendiisocyanat (HDI) und/oder deren Isocyanurat und Aminen, insbesondere Isophorondiamin (IPD).

## Beschreibung

Die Erfindung betrifft neue Polyharnstoffe auf der Basis von Isophorondiisocyanat (IPDI) Hexamethylendiisocyanat (HDI) und/oder deren Isocyanurat und Aminen, insbesondere Isophorondiamin (IPD).

Polyharnstoffe sind bekannt. Sie finden Anwendung in den folgenden technischen Gebieten als Klebstoffe im Bereich Holz und Papier, Schaumstoffe, sowie Harze für den Lack- und Beschichtungsbereich (Houben-Weyl E 20/2 (1987), S. 1721-1751; Houben-Weyl XIV/2 (1963), S. 165 - 171)

Es bestand die Aufgabe, neue Polyharnstoffe zu finden, die in fester Form bei für Pulverlacken üblichen Härtungstemperaturen von 150 bis 220 °C stabil bleiben, ohne nennenswerte Mengen (≤ 2 %) organischer Materialien wie auch Wasser freizusetzen.

Gegenstand der vorliegenden Erfindung sind Polyharnstoffe auf Basis von Isophorondiisocyanat (IPDI) und/oder Hexamethylendiisocyanat (HDI) und/oder deren Isocyanurate und Aminen mit einem NCO/NH₂-Verhältnis von 0,9 bis 1,1 zu 1 und einer mittleren Molmasse von mindestens 5.000.

Die neuen Polyharnstoffe enthalten als Ausgangsverbindungen Isophorondiisocyanat (IPDI), Hexamethylendiisocyanat (HDI) und Amine, insbesondere Isophorondiamin (IPD). Das IPDI und/oder HDI kann entweder als Diisocyanat oder als Isocyanurat eingesetzt werden. Ebenfalls von Vorteil und geeignet sind Mischungen aus diesen beiden Isocyanaten beziehungsweise deren Isocyanuraten.

Im Rahmen der Erfindung können alle aliphatischen, (cyclo)aliphatischen, cycloaliphatischen und aromatischen Diamine und/oder Polyamine (C₅ - C₁₈) eingesetzt werden, bevorzugt wird Isophorondiamin (IPD).

Im allgemeinen werden Polyharnstoffe mit einem NCO/NH₂-Verhältnis von 0,9 bis 1,1 zu 1 hergestellt. Bei Einsatz äquimolarer Mengen mit einem NCO/NH₂-Verhältnis von 1 zu 1 werden unendlich vemetzte, feste und spröde Polymere erhalten, die erst oberhalb von 240 °C unter Zersetzung schmelzen und in Lösemitteln unlöslich sind.

Bevorzugte Polyharnstoffe im Rahmen der Erfindung sind solche, die aus IPD und IPDI-Isocyanurat und/oder HDI-Isocyanurat und Gemischen daraus bestehen.

Weiterer Gegenstand der Erfindung ist ein Verfahren zur Herstellung von Polyharnstoffen auf der Basis von IPDI, HDI und Aminen, insbesondere IPD, wobei das Amin in einem Lösemittel wie z. B. Toluol vorgelegt wird, zu dem anschließend unter Rühren das gegebenenfalls ebenfalls mit einem Lösemittel verdünnte Isocyanat hinzugegeben wird. Zur Erzielung eines vollständigen Umsatzes wird das Reaktionsgemisch 2 bis 3 Stunden unter Rückfluss des Lösemittels erhitzt, anschließend wird abgekühlt, das entstandene Polymer abgetrennt (Filtration) und anschließend 3 bis 6 Stunden bei 130 bis 170 °C im Vakuum getrocknet.

Die erfindungsgemäßen Polyharnstoffe können als Rohstoffe in der Lackindustrie, insbesondere zur Herstellung von Lacken, Farben und Beschichtungen eingesetzt werden.

Die Erfindung wird durch die folgenden Beispiele näher erläutert.

### Beispiele

### Allgemeine Herstellungsmethode

In einem 2 Ltr. Dreihalskolben, ausgerüstet mit Rührer, Tropftrichter und Heizpilz, werden 70 g IPD, verdünnt in 1 000 ml Toluol, vorgelegt. Unter Rühren wird dann die äquivalente (NH₂ : NCO = 1 : 1) Menge des entsprechenden Isocyanates bzw. eines Gemisches, verdünnt mit der gleichen Menge an Toluol, zu der vorgelegten Aminlösung langsam hinzugetropft. Nach erfolgter Zugabe wird das Reaktionsgemisch noch 2 Stunden unter Rückfluss erhitzt. Anschließend wird auf Raumtemperatur abgekühlt, das entsprechende Festprodukt (Polyharnstoff) abfiltriert und im Vakuum getrocknet (3 bis 6 Stunden bei 130 bis 170 °C).

| **Polyharnstoff-Beispiele (Angabe in Masse-Teilen)** | | | | |
|---|---|---|---|---|
| | **IPD** | **IPDI** | **IPDI-Trimer**^{**1)**} | **HDI-Trimer**^{**2)**} |
| PH-1 | 70 | - | 183 | - |
| PH-2 | 70 | - | - | 138 |
| PH-3 | 70 | 61 | 61 | - |
| PH-4 | 70 | - | 91 | 69 |

| | | | | |
|---|---|---|---|---|
| ¹⁾VESTANAT T 1890, Degussa-Hüls AG | | | | |
| ²⁾ DESMODUR N 330, Bayer AG | | | | |

Alle Produkte sind weiße/farblose, spröde Feststoffe, die in üblichen Lösemitteln unlöslich sind und nur unter Zersetzung oberhalb von 240 °C schmelzen.

Zum Einsatz der beschriebenen Polyharnstoffe, z.B. in Pulverlacken, ist es vorteilhaft, die Produkte zu mahlen und auf ≤ 100 µm abzusieben.

## Patentansprüche

1. Polyharnstoff auf Basis von Isophorondiisocyanat (IPDI) und/oder Hexamethylendiisocyanat (HDI) und/oder deren Isocyanurate und Aminen mit einem NCO/NH₂-Verhältnis von 0,9 bis 1,1 zu 1 und einer mittleren Molmasse von mindestens 5000.

2. Polyharnstoff nach Anspruch 1, bestehend aus IPDI und Isophorondiamin (IPD).

3. Polyharnstoff nach Anspruch 1, bestehend aus dem Isocyanurat des IPDI und IPD.

4. Polyharnstoff nach Anspruch 1, bestehend aus einem Gemisch von IPDI und IPDI-Isocyanurat und IPD.

5. Polyhanrstoff nach Anspruch 1, bestehend aus HDI und IPD.

6. Polyharnstoff nach Anspruch 1, bestehend aus dem Isocyanurat des HDI und IPD.

7. Polyharnstoff nach Anspruch 1, bestehend aus einem Gemisch von HDI und HDI-Isocyanurat und IPD.

8. Polyharnstoff nach Anspruch 1, bestehend aus einem Gemisch von IPDI- und HDI-Isocyanurat und IPD.

9. Polyharnstoff nach mindestens einem der Ansprüche 1 bis 8,
**dadurch gekennzeichnet,**
**dass** dieser als Feststoff vorliegt und in Lösemitteln unlöslich ist.

10. Verfahren zur Herstellung von Polyharnstoffen auf der Basis von IPDI und/oder HDI und/oder deren Isocyanurate und Aminen gemäß den Ansprüchen 1 bis 9,
**dadurch gekennzeichnet,**
**dass** das Amin in einem Lösemittel vorgelegt wird, zu dem anschließend unter Rühren das gegebenenfalls ebenfalls mit einem Lösemittel verdünnte Isocyanat hinzugegeben wird, danach 2 bis 3 Stunden unter Rückfluss des Lösemittels erhitzt, anschließend abgekühlt, das entstandene Polymer abgetrennt und anschließend 3 bis 6 Stunden bei 130 bis 170 °C im Vakuum getrocknet wird.

11. Verwendung der Polyharnstoffe gemäß den Ansprüchen 1 bis 8 als Rohstoffe in der Lackindustrie.

12. Verwendung der Polyharnstoffe gemäß den Ansprüchen 1 bis 8 zur Herstellung von Lacken, Farben und Beschichtungen.
